# EUROPEAN PATENT SPECIFICATION

(11) **EP 2 045 128 B1**
(45) Date of publication and mention of the grant of the patent: **14.12.2011**
(21) Application number: 08165621.7
(22) Date of filing: 01.10.2008
(51) Int. Cl.: B60Q 3/00, B60Q 3/02

(54) **Shim, connecting structure using shim, and interior lamp using shim**
Scheibe, Verbindungsstruktur mit der Scheibe und Innenlampe mit Scheibe
Support, structure de connexion et lampe d'intérieur l'utilisant

(30) Priority: 02.10.2007 JP 2007259248
(43) Date of publication of application: 08.04.2009
(73) Proprietor: Toyota Boshoku Kabushiki Kaisha, Kariya-shi, Aichi-ken 448-8651 (JP)
(72) Inventor: Kojima, Natsuki, Kariya-shi Aichi 448-8651 (JP); Yaoichi, Shinichi, Kariya-shi Aichi 448-8651 (JP); Omura, Naomi, Kariya-shi Aichi 448-8651 (JP)
(74) Representative: TBK

(56) References cited:
- EP-A- 0 622 257
- DE-A1- 2 507 857
- DE-A1- 19 745 871
- JP-A- 59 011 914
- US-A1- 2007 066 206

## Description

### BACKGROUND OF THE INVENTION

### Field of the Invention

The present invention relates to a shim that is interposed between connecting portions of connection members, which relatively rotate around each other, and that applies a load generated from friction during relative rotation of the connection members, and a connecting structure using the shim. More specifically, the present invention relates to a shim capable of downsizing a connecting structure without reducing a frictional force, a connecting structure using the shim, and an interior lamp using the shim. The present shim and the connecting structure using the shim can be used most notably for an interior lamp employed in a vehicle, as well as for any connecting structure with at least one shaft, such as a fin of a register provided at an air outlet or the like of an air conditioner, and a command stick that instructs an orientation or the like of a cursor display for a car navigation system, etc., and that of a door mirror and a side mirror.

### Description of the Related Art

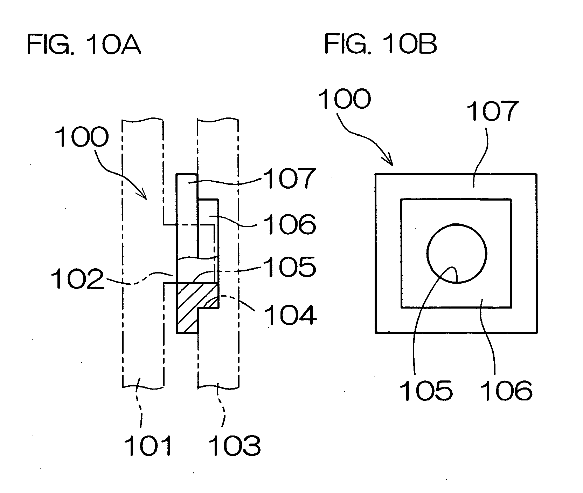

For example, a register provided in an air outlet of an air conditioner for an automobile has a fin, and the fin is supported by a rotatable two-axis connecting structure such that an orientation of the fin can be manually changed to modify the direction of air. A shim is utilized in the connecting structure to ensure that the fin orientation does not easily rotate and change the direction of air. To this end, the shim generates a certain degree of resistance when the fin orientation is changed (see Patent Document 1).
As shown in FIG. 10, a shim 100 is interposed between a rotational shaft portion 102 of a first connection member 101 and a bearing portion 104 of a second connection member 103. The shim 100 includes a bearing hole 105 fitted with the rotational shaft portion 102 and a fixed projection 106 fitted with the bearing portion 104. Here, the rotational shaft portion 102 and the bearing hole 105 are shaped as cylinders, and the first connection member 101 and the shim 100 are provided capable of mutual relative rotation. Meanwhile, the bearing portion 104 and the fixed projection 106 are shaped as square columns, and the second connection member 103 and the shim 100 are fixed and incapable of mutual relative rotation.
Accordingly, when an external force acts that causes the first connection member 101 and the second connection member 103 to relatively rotate, the first connection member 101 rotates with respect to the second connection member 103 and the shim 100, with rotation starting at the point when the external force exceeds a resistance generated by friction between an outer peripheral surface of the rotational shaft portion 102 and an inner peripheral surface of the bearing hole 105.

[Patent Document 1] Japanese Patent Application Publication No. JP-A-2001-97035

In the shim 100 according to related art, however, since the inner peripheral surface of the bearing hole 105 serves as the friction surface, enlarging the friction surface further increases an outer diameter of the shim 100. The connecting structure also consequently increases in size, which has made it difficult to enlarge the friction surface. In addition, the fixed projection 106 being on an outer peripheral side of the shim 100 and having a square shape have also been obstacles to downsizing of the connecting structure. Furthermore, a seat 107 is required to support the fixed projection 106, and the seat 107 is positioned between the two connection members 101 and 103. This inevitably results in the creation of an extra gap between the two connection members 101 and 103. And if the shim 100 is attached to a cylindrical surface or a spherical surface, then a comparatively wide surface area must be made flat for attachment since the shim 100 has a square shape. This consequently poses an added difficulty for downsizing of the connecting structure.

Furthermore, a shim having the features of the preamble of claim 1 is known from DE 197 45 871 A1.

### SUMMARY OF THE INVENTION

In view of the foregoing situation, it is an object of the present invention to provide a shim capable of downsizing a connecting structure without reducing a frictional force, a connecting structure using the shim, and an interior lamp using the shim.

This object is solved with a shim having the features of claim 1.

According to the shim, the connecting structure using the shim, and the interior lamp using the shim of the present invention, the outer peripheral surfaces of the base portion and the major diameter portion serve as friction surfaces to rotatably hold the first connection member. Therefore, a wider friction surface compared to related art that uses an inner peripheral surface as a friction surface can be secured. Accordingly, the shim can be downsized provided that a frictional force equivalent to that of related art is obtained. Since a wider friction surface can be secured, the friction surface is correspondingly less prone to wear, thereby suppressing deterioration in the frictional force due to aging. Furthermore, since a wider friction surface can be secured, bearings may be provided at one location, thus making it possible to keep the number of parts and man-hours at a minimum.
Since the friction surface is formed in a stepped configuration as well, even if the first connection member is shaped as a plate and the shim-receiving hole is a through hole, providing a step corresponding to the through hole can prevent detachment of the shim. Moreover, due to the formation of the stepped configuration, it is also possible to prevent wrong assembly during assembly.
The base portion and the major diameter portion are shaped as discs. Thus in the case of attachment to a cylindrical surface or a spherical surface, the surface area of a flat plane required for attachment can be made smaller compared to a square shape such as that according to related art. Accordingly, downsizing of the connecting structure can be achieved. Furthermore, since the base portion and the major diameter portion are fitted in the shim-receiving holes, there is no need to provide an extra gap between the two connection members.

In addition, the fixed concave portion may be further provided around the foot of the fixed portion of the shim and the end of the fixed portion receiver of the second connection member may be fitted and held stationary with the fixed concave portion. In such case, the shim and the second connection member are fitted with the outer peripheral surface of the fixed portion and the inner peripheral surface of the fixed portion receiver, while the inner peripheral surface of the fixed concave portion and the outer peripheral surface of the fixed portion receiver are also fitted. As a consequence, the fixing power of the shim and the second connection member can be increased and there is less tendency to break. Moreover, a part of the fixed portion receiver of the second connection member is fitted so as to be embedded within the shim. Therefore, the connecting structure can be easily downsized without the fixed portion receiver greatly projecting from the second connection member.
Furthermore, if the shim-receiving hole is a through hole whose depth equals the sum of the thicknesses of the base portion and the major diameter portion, i.e., the thickness of the shim, then the shim-receiving hole can be easily formed and/or processed, thereby facilitating manufacture of the connecting structure. Since the thicknesses of the first connection member and the second connection member can be thinly formed up to the same thickness as the shim-receiving hole, further downsizing of the connecting structure is easily achieved.

### BRIEF DESCRIPTION OF THE DRAWINGS

FIGS. 1A to 1C are drawings showing a shim according to an embodiment, where FIG. 1A is a front view, FIG. 1B is a side view, and FIG. 1C is a back view;
FIG. 2 is an exploded assembly drawing showing a shim and a support ring according to the present embodiment;
FIG. 3 is a vertical cross-sectional view showing a state in which an interior lamp is sectioned along a first rotational shaft;
FIG. 4 is a vertical cross-sectional view showing a state in which the interior lamp is sectioned along a second rotational shaft;
FIG. 5 is an exploded assembly drawing of the interior lamp;
FIG. 6 is a perspective view showing the second rotational shaft;
FIG. 7 is a vertical cross-sectional view showing a state in which an illuminating part is rotated a maximum extent;
FIG. 8 is a vertical cross-sectional view showing a state during an operation to mount the interior lamp to a ceiling;
FIGS. 9A to 9C are perspective views showing rotation patterns of the illuminating part, where FIG. 9A shows the illuminating part at a neutral position, FIG. 9B shows the illuminating part rotated around the first rotational shaft, and FIG. 9C shows the illuminating part rotated around the second rotational shaft; and
FIGS. 10A and 10B are drawings showing a shim according to related art, where FIG. 10A is a side view and FIG. 10B is a back view.

### DESCRIPTION OF REFERENCE NUMERALS AND SIGNS

### DETAILED DESCRIPTION OF THE PREFERRED EMBODIMENT

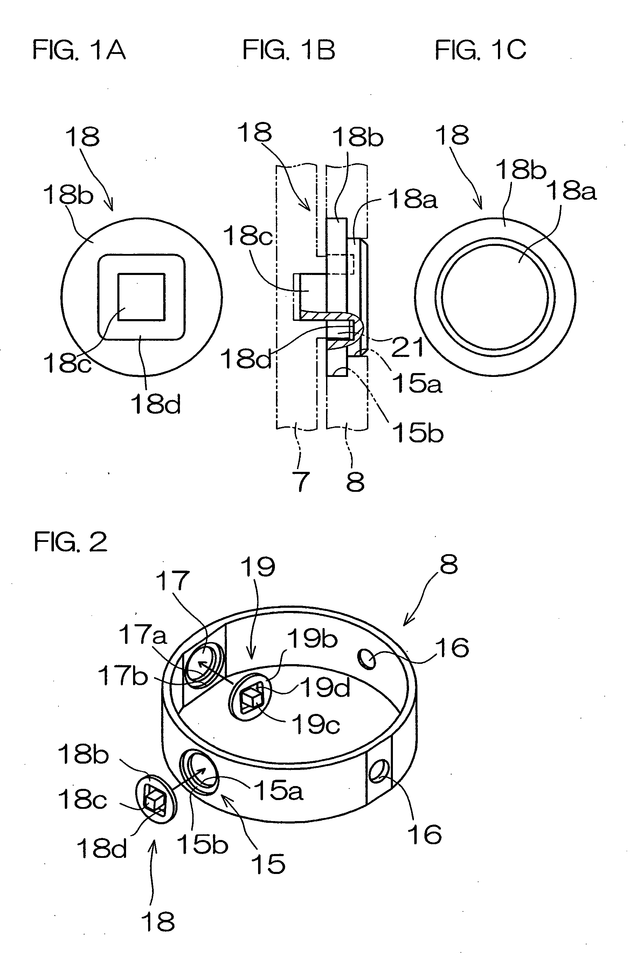

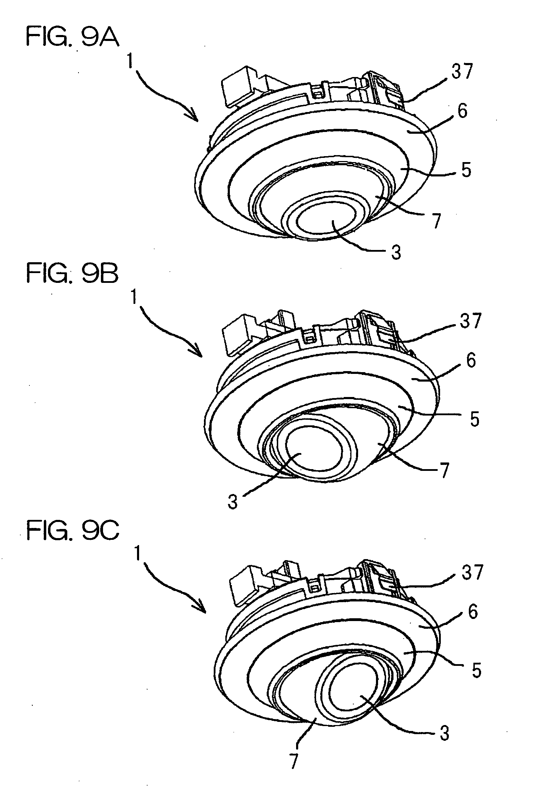

A shim of the present invention is a shim that is designed to be interposed between a first connection member and a second connection member, which are capable of relative rotation, and that applies a load generated from friction during relative rotation. FIG. 1 shows an embodiment of the invention, wherein the shim is including a base portion 18a shaped as a disc and whose outer peripheral surface serves as a friction surface, a major diameter portion 18b shaped as a disc whose diameter is larger than that of the base portion 18a, and whose outer peripheral surface serves as a friction surface, and which is provided in a stepped configuration continuing from the base portion 18a; and a fixed portion 18c shaped as a square column that projects from the major diameter 18b side in the axial direction.
Any material may be selected for the present shim provided that the material has wear resistance, can be used as an ordinary shim, and unless manipulated can maintain a positional relationship between the first connection member and the second connection member due to friction. Elastomer, rubber, and resin are possible examples. Examples of an elastomer include a polyolefin elastomer, a polyester elastomer, and so forth. Examples of a rubber include SBR, IR, CR, EPDM, and so forth. Examples of a resin include PBT, PETE, POM, and so forth.
In addition, a difference between diameters of the base portion 18a and the major diameter portion 18b may be arbitrarily set depending on the application, although it is necessary to secure a sufficient difference such that, when disposing the present shim, the shim does not become displaced from a step structured by the base portion 18a and the major diameter portion 18b.
The fixed portion 18c preferably has a shape capable of being fitted and held stationary with a fixed portion receiver of the second connection member, and the fixed portion 18c can be arbitrarily shaped as a square column. Any planar shape may be selected for the square column. Examples of a planar shape of the square column include a square column whose angles are equal, such as a square, a rectangle, and a hexagon, as well as a square column whose angles are not equal, such as a cross and a star. In addition, a center axis of the base portion 18a and a center axis of the major diameter 18b and the fixed portion 18c are preferably arranged so as to be positioned on the same axis line. However, the center axes are not limited to a configuration on the same axis line, and may be arranged so as to be positioned on different axis lines.
The shim and the connecting structure using the shim according to the present invention can be employed for any application, wherein an orientation can be changed by manual operation in a range of one or two axes, and following the operation such an orientation can be maintained intact. An example of this is illustrated in FIG. 9, where an interior lamp 1 is capable of changing an illumination direction by changing an orientation of a lens 3 using the present connecting structure. Another example is a register provided in an air outlet of an air conditioner that is capable of changing an air-blowing direction by changing an orientation of a fin using the present connecting structure. Further examples include a command stick, wherein using the present connecting structure to change an orientation of a stick can instruct a cursor display position for a car navigation system, etc., and instruct an orientation of a mirror such as a door mirror and a side mirror.

An interior lamp according to an embodiment of the present invention is including an illuminating part that is provided with a light source; a switch that performs selection of a lighting control for the light source; and a housing that supports the illuminating part and the switch.
The above "illuminating part" is not particularly limited in terms of size, quantity and the like, provided that an illumination direction thereof can be changed according to support by the housing, via at least one rotational shaft. Any number of rotational shafts, such as one or two shafts, may be selected depending on the application of the interior lamp.
In the case of two shafts, it is possible to change the orientation in a range of a plane thus formed. The two rotational shafts are ordinarily disposed so as to be at right angles to one another. However the two rotational shafts are not restricted to this arrangement, and an angle formed by the two rotational shafts is not particularly limited. In addition, the illuminating part is provided with a light source, and an orientation of the light source simultaneously changes with a change in an orientation of the illuminating part.
The respective rotational shafts can be provided with the connecting structure at one location or at two opposing corners. Furthermore, connecting structural bodies can be used in which all or at least one of the connecting structural bodies use the present shim.
An exposed portion of the illuminating part may have a shape selected at will, but a rim shape of the exposed portion is preferably a perfect circle. This is to secure a superior aesthetic and ensure that there is no interference when changing the orientation of the illuminating part.
The above-mentioned "light source" is not particularly limited in terms of type, shape, size, quantity and the like, provided that the light source electrically emits light. The light source may be an LED, for example.
Also, the illuminating part and/or the light source may be provided with a lens for adjusting light flux emitted from the light source. The lens is not limited in terms of size, material, shape and the like, provided that the lens is capable of diffusing light from the light source in a range depending on the application.

The above-mentioned "switch" is not particularly limited in terms of shape, size and the like, provided that the switch can be used to select a lighting control for the light source. The selection of a lighting control can be performed at will. For example, three modes may be selected consisting of regular lighting and non-lighting of the interior lamp, and lighting associated with the opening and closing of a door, or two modes may be selected consisting of lighting and non-lighting of the interior lamp. The switch can also be used to select a brightness, a flashing mode and the like of the interior lamp.

The above-mentioned "housing" is not particularly limited in terms of shape, size and the like, provided that the housing supports the illuminating part and the switch. The housing may be made, for example, from materials such as synthetic resin, metal and the like. Also, an arbitrary flat shape may be selected for the housing, including examples such as a perfect circle shape, a regular polygon shape (e.g. from a regular triangle to a regular dodecagon or the like), and an oval shape. Among these examples, the perfect circle shape is particularly preferable. This is due to the fact that a design significantly different from an interior lamp according to related art can be obtained.

### Embodiment

Hereinafter, a specific description of the present invention will be given with reference to the accompanying drawings. An embodiment here is an interior lamp for a passenger vehicle such as an automobile, which uses a shim and a connecting structure according to the present invention.

### (1) Structure of the Embodiment

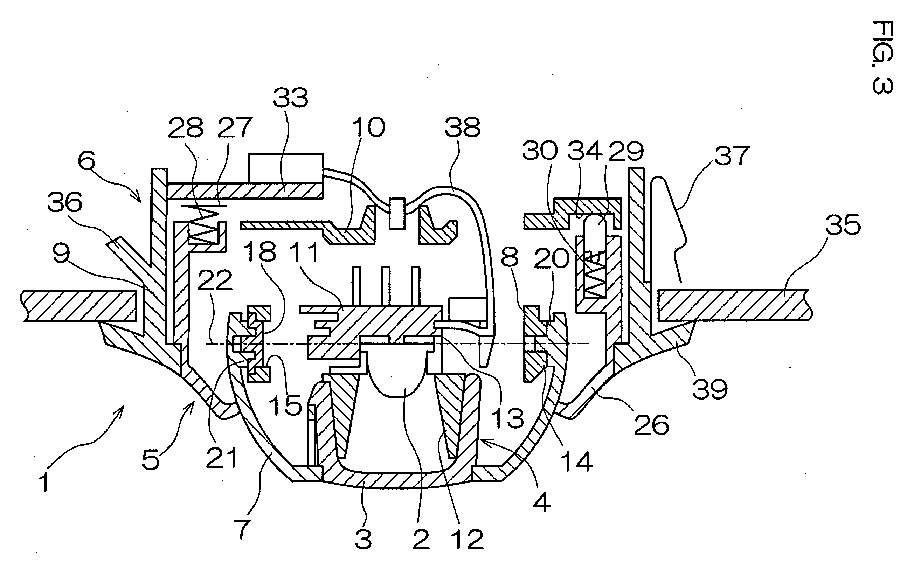

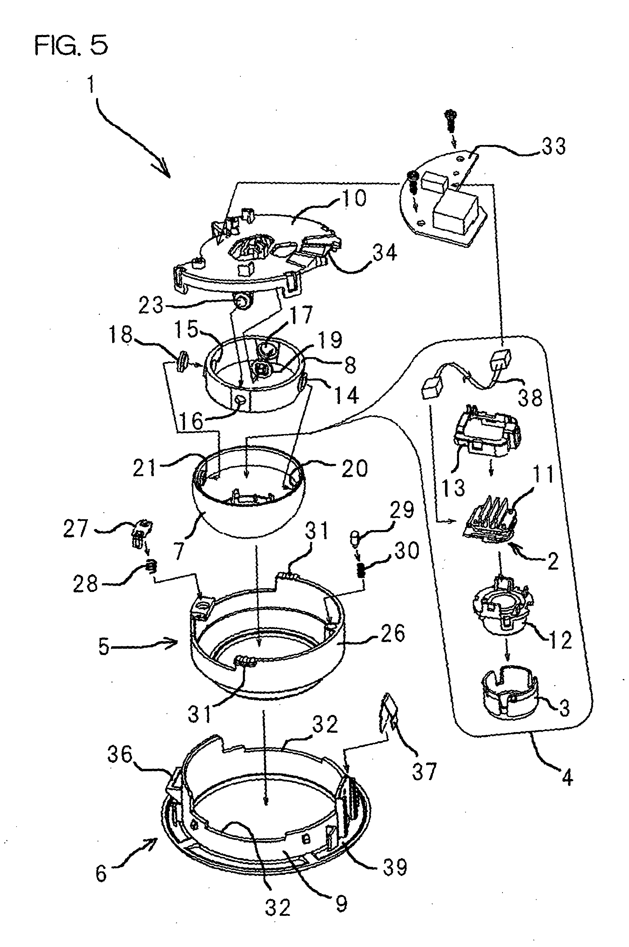

As FIGS. 3 to 5 illustrate, an interior lamp 1 according to the present embodiment includes an illuminating part 4 provided with a light source 2 and a lens 3; a ring type switch 5 that performs an on-off control of the light source 2; a lens holder 7 that supports the illuminating part 4; a support ring 8 that supports the lens holder 7; and a housing 6 that supports the support ring 8 and the ring type switch 5. The housing 6, the ring type switch 5, the lens holder 7, and the illuminating part 4 are formed in a configuration of concentric circles.
The housing 6 is circular and made of synthetic resin, and also includes an outer bezel 9 exposed to an interior side, as well as an outer plate 10 resembling a cover attached to a back side thereof. Other parts are accommodated within the outer bezel 9 and the outer plate 10.
The illuminating part 4 includes an LED unit 11 equipped with an LED serving as the light source 2; an LED holder 12 that prevents the diffusion of light rays from the light source 2; the lens 3, and an LED hold plate 13 integrated with these. The illuminating part 4 is fixed to the lens holder 7.

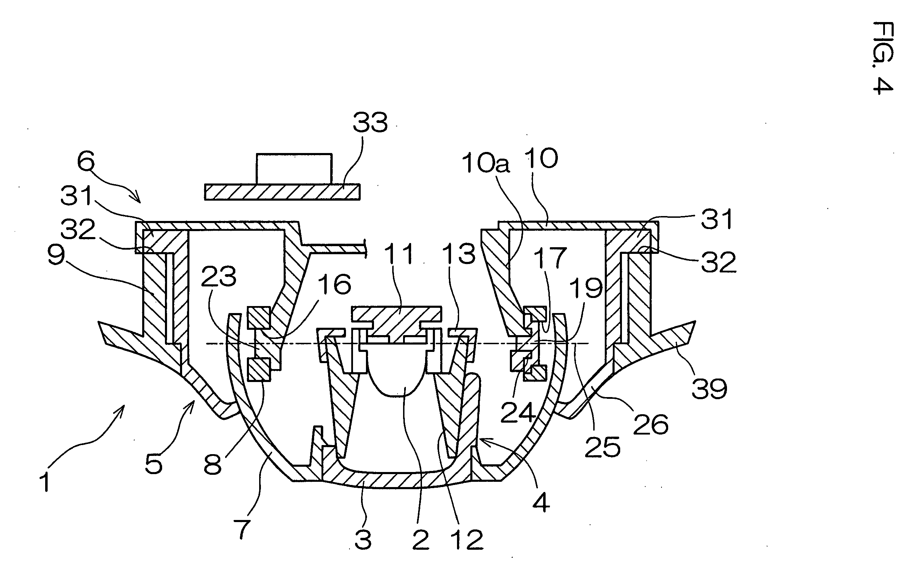

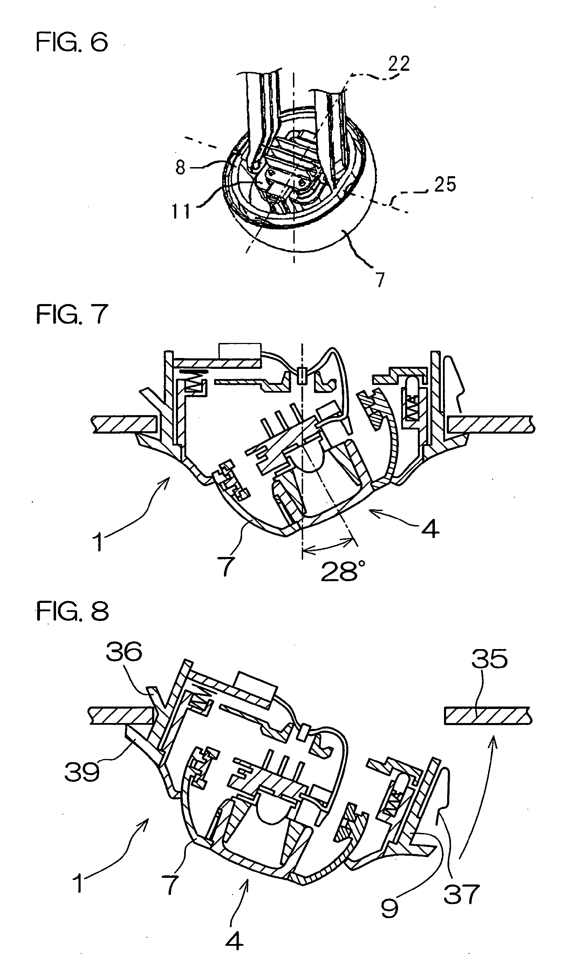

An inner side of the lens holder 7 is provided with the support ring 8, which has a toric shape. As shown in FIGS. 2 to 5, the support ring 8 is formed from a first rotational shaft end 14 that projects to an outer peripheral side, and a first shim-receiving hole 15 that is a through hole formed on a side opposite of the first rotational shaft end 14, whereby the support ring 8 structures a first connection member of a first connecting structure. The support ring 8 is also formed from a second bearing 16 formed at a position displaced 90 degrees from the first rotational shaft end 14; and a second shim-receiving hole 17 that is a through hole formed on a side opposite of the second bearing 16, whereby the support ring 8 structures a first connection member of a second connecting structure. A first shim 18 and a second shim 19 are rotatably provided in the first shim-receiving hole 15 and the second shim-receiving hole 17, respectively.
The first shim 18 is made of elastomer. And as FIG. 1 shows, the first shim 18 includes the following: a base portion 18a shaped as a disc and whose outer peripheral surface serves as a friction surface; a major diameter portion 18b shaped as a disc whose diameter is larger than that of the base portion 18a, and whose outer peripheral surface serves as a friction surface, and which is provided in a stepped configuration continuing from the base portion 18a with central axes thereof aligned; a fixed portion 18c shaped as a square column that projects from the major diameter 18b side in the axial direction; and a fixed concave portion 18d formed from a concave portion shaped as a square column that is formed around the foot of the fixed portion 18c. It should be noted that the second shim 19 has an identical structure, and therefore the same reference signs a to d are assigned to like components as 19a to 19d with accompanying descriptions omitted.
The first shim-receiving hole 15 of the support ring 8 is provided with a base portion receiver 15a that is rotatably fitted with the base portion 18a of the first shim 18 and simultaneously generates friction, and a major diameter portion receiver 15b that is rotatably fitted with the major diameter portion 18b and simultaneously generates friction. An inner peripheral surface of the first shim-receiving hole 15 has a stepped configuration. Since the inner peripheral surface has such a stepped configuration, detachment of the first shim 18 can be prevented. It should be noted that the second shim-receiving hole 17 has an identical structure, and therefore the same reference signs a to b are assigned to like components as 17a to 17b with accompanying descriptions omitted.
An inner peripheral side of the lens holder 7 is formed with a first bearing 20 that receives the first rotational shaft end 14 of the support ring 8, and a first fixed portion receiver 21 that is fitted and held stationary with the fixed portion 18c and the fixed concave portion 18d of the first shim 18, whereby the first bearing 20 and the first fixed portion receiver 21 structure a second connection member of the first connecting structure. Namely, the first fixed portion receiver 21 is held stationary by fitting the inner peripheral surface thereof with the fixed portion 18c, and the outer peripheral surface thereof with the fixed concave portion 18d.
The first rotational shaft end 14 is rotatably supported by the first bearing 20 and the first shim 18 fixed to the lens holder 7 is rotatably supported by the first shim-receiving hole 15, whereby the lens holder 7 and the support ring 8 structure the first connecting structure.
Thus assembled as the first rotational shaft 22, the lens holder 7 and the support ring 8 are rotatable and capable of being held at an arbitrary angle by operation of the shim 18 (see FIG. 3).
The outer plate 10 is formed with a second rotational shaft end 23, and a second fixed portion receiver 24 that is fitted and held stationary with the fixed portion 19c and the fixed concave portion 19d of the second shim 19, whereby the second rotational shaft end 23 and the second fixed portion receiver 24 structure a second connection member of the second connecting structure. Namely, the second fixed portion receiver 24 is held stationary by fitting the inner peripheral surface thereof with the fixed portion 19c, and the outer peripheral surface thereof with the fixed concave portion.
In addition, the outer plate 10 is formed with a support column 10a. The second rotational shaft end 23 is rotatably supported by the second bearing 16 and the second shim 19 fixed to the outer plate 10 is rotatably supported by the second shim-receiving hole 17, whereby the support column 10a and the support ring 8 structure the second connecting structure. Thus assembled as the second rotational shaft 25, the support column 10a and the support ring 8 are rotatable and capable of being held at an arbitrary angle by operation of the shim 19 (see FIG. 4).
Here, the first rotational shaft 22 that connects the lens holder 7 and the support ring 8 forms a 90-degree angle with the second rotational shaft 25 that connects the support ring 8 and the outer plate 10 (see FIG. 6). Additionally, a maximum rotational angle of the rotational shafts is 56 degrees (see FIG. 7).

An outer side of the lens holder 7 is provided with the ring type switch 5. The ring type switch 5 includes a toric switch knob 26; a metal switch plate 27 that serves as a switch contact; a switch spring 28 that biases the switch plate 27; and a pin 29 and a pin spring 30 for achieving a feeling of detent during rotation of the switch. A peripheral edge of the switch knob 26 has a pair of flanges 31 that are provided at even intervals, that is, at positions that equally divide the switch knob 26. The flange 31 serves as a rotational shaft of the switch knob 26, wherein the flanges 31 are accommodated in a guide hole 32 formed by the outer bezel 9 and the outer plate 10, and guided to within a predetermined rotational angle.
The switch plate 27 contacts a contact pattern of a substrate 33 mounted on the outer plate 10. The pin 29 is movably set in three concave portions 34 formed in the outer plate 10. By rotating the switch knob 26, the pin 29 biased toward the concave portion 34 by the pin spring 30 moves from one concave portion 34 to another concave portion 34. Accordingly, it is possible to achieve a sensation of the state of the switch changing. At the same time, the switch plate 27 moves with respect to the substrate 33, which changes a state of connection with the contact pattern. In the present embodiment, the three modes of regular lighting and non-lighting of the lamp and lighting associated with the opening and closing of a door can be selected.
The outer bezel 9 includes a flange 39 exposed to an interior side, as well as a tab 36 and an engagement spring 37 that catch on a back side of a ceiling 35. The engagement spring 37 and the tab 36 are disposed on opposite sides, and are structured such that the engagement spring 37 elastically deforms during mounting of the interior lamp 1 to the ceiling 35 to allow mounting. After mounting, the engagement spring 37 and the tab 36 prevent detachment by catching on a back surface of the ceiling 35. The outer plate 10 is attached with the substrate 33. The substrate 33 and the LED unit 11 are connected via a wire harness 38.

One interior lamp 1 is provided at a position around a rearview mirror, which is also the ceiling 35 above a front seat of a passenger vehicle. Thus, it is possible to illuminate a wide area ranging from the hands of a passenger in the front seat to a luggage space behind a rear seat.

### (2) Operation of the Embodiment

The assembly sequence of the interior lamp 1 with the above-described structure will be explained next.
First, to assemble the illuminating part 4, the LED holder 12 is mounted to the lens 3 and then the LED unit 11 is placed thereupon, followed by the LED hold plate 13. The LED unit 11 is connected with the wire harness 38. The illuminating part 4 is then mounted to the lens holder 7.
The first shim 18 is fitted and fixed to the first fixed portion receiver 21 of the lens holder 7.
Next, the first shim-receiving hole 15 of the support ring 8 is fitted with the first shim 18 and the first rotational shaft end 14 is fitted with the first bearing 20, whereby the support ring 8 is mounted on the inner side of the lens holder 7.
The second shim 19 is fitted and fixed to the second fixed portion receiver 24 of the outer plate 10. Next, the second shim-receiving hole 17 of the support ring 8 is fitted with the second shim 19 of the outer plate 10 and the second rotational shaft end 23 is fitted with the second bearing 16, whereby the outer plate 10 is mounted on the support ring 8.
Meanwhile, an inner side of the outer bezel 9 is mounted with the switch knob 26. At such time, the flanges 31 of the switch knob 26 enter the guide hole 32 of the outer bezel 9. The switch plate 27 and the switch spring 28 are subsequently mounted, and the pin 29 and the pin spring 30 are also mounted.
Next, the outer plate 10 assembled with the illuminating part 4, the lens holder 7, and the support ring 8 is attached to the outer bezel 9. An outer side of the outer plate 10 is further screwed with the substrate 33 and the wire harness 38 is connected with the substrate 33.
When attaching the interior lamp 1 to the ceiling 35, as FIG. 8 shows, the tab 36 of the outer bezel 9 diagonally catches on an edge of a mounting hole of the ceiling 35. The opposite side is then lifted up, after which the engagement spring 37 elastically deforms and presses into the back of the ceiling 35. Thus, detachment is prevented by the tab 36 and the engagement spring 37 catching on the back of the ceiling 35.

The operation of the interior lamp 1 with the above-described structure will be explained next.
When a user grasps and rotates the switch knob 26, the switch plate 27 moves and switches between on and off states of the light source 2. Furthermore, when the user grasps the lens holder 7 for the application of external force to change an optical axis, as FIG. 9 shows, the lens holder 7 is suitably rotated with respect to the outer plate 10 via the two rotational shafts 22 and 25 of the support ring 8. Accordingly, an arbitrary position within a range of mobility can be illuminated. Here, regarding the first rotational shaft 22, the first shim 18 while rotating generates friction with the first shim-receiving hole 15 of the support ring 8, and therefore makes it possible to hold the first rotational shaft 22 at an arbitrary angle after rotation. Likewise regarding the second rotational shaft 25, the second shim 19 while rotating generates friction with the second shim-receiving hole 17 of the support ring 8, and therefore makes it possible to hold the second rotational shaft 25 at an arbitrary angle after rotation.

### (3) Effects of the Embodiment

According to the shims 18 and 19 and the connecting structure using these of the present embodiment, since the fixed concave portions 18d and 19d are provided, rotation with respect to the fixed portion receivers 21 and 24 can be more securely stopped.
According to the interior lamp 1 of the present embodiment, the inner side of the lens holder 7 is provided with the two rotational shafts 22 and 25, whereby the mobility range of the illuminating part 4 can be widely set and rotation securely stopped.
In addition, the outermost circumference of the shims 18 and 19 is the major diameter portions 18b and 19b, respectively, and the shims 18 and 19 are only as thick as the base portions 18a and 19a and the major diameter portions 18b and 19b, respectively. Furthermore, an arrangement is possible where detachment is prevented by the step formed from the base portions 18a and 19a and the major diameter portions 18b and 19b. As a consequence, the support ring 8 can be made thin and the creation of a small interior lamp can be achieved.

It should be noted that the present invention is not limited to the embodiment described above, and various modifications depending on the purpose and application are possible that fall within the scope of the present invention. Namely, although the shims 18 and 19 are provided with the fixed concave portions 18d and 19d in the above embodiment, the present invention is not limited to this, and the fixed concave portions 18d and 19d may be omitted. In addition, the support ring 8 is provided with the shim-receiving holes 15a and 17a, and thus has two first connection members. However, the present invention is not limited to this, and the lens holder 7 and/or the outer plate 10 may be provided with shim-receiving holes to structure a first connection member, and a second connection member may be structured by the support ring 8.
Furthermore, although the shims 18 and 19 are made of elastomers in the above embodiment, the present invention is not limited to this, and any resin with wear resistance such as PBT, PETE, and POM, for example, may be selected as appropriate.
In the above embodiment, the connecting structure using the shims 18 and 19 is applied to the interior lamp 1 of an automobile. However, the present invention is not limited to this, and may be applied to any structure in general that holds a rotational member at an arbitrary angle, such as a register of an air conditioner.

The present invention is utilized in a mechanism that holds a rotational member at an arbitrary angle. The present invention can be used most notably for an interior lamp employed in a vehicle, as well as for any biaxial connecting structure, such as a fin of a register provided at an air outlet or the like of an air conditioner, and a command stick that instructs an orientation adjustment or the like of a cursor for a car navigation system, etc., and that of a door mirror and a side mirror.
The present invention provides a shim capable of achieving downsizing without reducing a frictional force, a connecting structure using the shim, and an interior lamp using the shim. A connecting structure includes a first connection member 8 and a second connection member 7 capable of mutual relative rotation, and a shim 18 interposed between the members. The shim includes a disc shaped base portion 18a whose outer peripheral surface serves as a friction surface; a disc shaped major diameter portion 18b provided in a stepped configuration, whose diameter is larger than that of the base portion and whose outer peripheral surface serves as a friction surface; and a square column shaped fixed portion 18c projecting from the major diameter portion side in the axial direction. The first connection member has a stepped shim-receiving hole 15 including a base portion receiver 15a and a major diameter portion receiver 15b rotatably fitted with the portions, respectively. The second connection member includes a fixed portion receiver 21 fitted and held stationary with the fixed portion.

## Claims

1. A shim (18, 19) suitable for being interposed between a first connection member (8) and a second connection member (7), which are capable of relative rotation, and suitable for applying a load generated from friction during relative rotation, said shim (18, 19) including:
a base portion (18a, 19a) shaped as a disc and whose outer peripheral surface is suitable for serving as a friction surface;
a major diameter portion (18b, 19b) shaped as a disc whose diameter is larger than that of said base portion (18a, 19a) and whose outer peripheral surface is suitable for serving as a friction surface, and which is provided in a stepped configuration continuing from said base portion (18a, 19a); **characterized by**
a fixed portion (18c, 19c) shaped as a square column that projects from said major diameter portion (18b, 19b) side in the axial direction.

2. The shim according to claim 1, wherein a fixed concave portion (18d, 19d) formed from a concave portion shaped as a square column is further provided around a foot of said fixed portion (18c, 19c).

3. A connecting structure comprising a first connection member (8) and a second connection member (7) capable of mutual relative rotation, and a shim (18, 19) having the features of claims 1 or 2, that is interposed between said connection members (7,8) and applies a load generated from friction during relative rotation, wherein
said first connection member (8) comprises a stepped shim-receiving hole (15, 17) provided with a base portion receiver (15a, 17a) that is rotatably fitted with said base portion (18a, 19a), and a major diameter portion receiver (15b, 17b) that is rotatably fitted with said major diameter portion (18b, 19b), and
said second connection member (7) comprises a fixed portion receiver (21, 24) fitted and held stationary with said fixed portion (18c, 19c).

4. The connecting structure according to claim 3, wherein a fixed concave portion (18d, 19d) formed from a concave portion shaped as a square column is further provided around a foot of said fixed portion (18c, 19c) of said shim (18, 19), and an end of said fixed portion receiver (21, 24) of said second connection member (7) is fitted and held stationary with said fixed concave portion (18d, 19d).

5. The connecting structure according to claim 4, wherein said shim-receiving hole (15, 17) is a through hole whose depth is a sum of thicknesses of said base portion (18a, 19a) and said major diameter portion (18b, 19b).

6. An interior lamp (1) including an illuminating part (4) that is provided with a light source (2); a switch (5) that performs selection of a lighting control for said light source (2); and a housing (6) that supports said illuminating part (4) and said switch (5), said interior lamp (1) **characterized in that**
said illuminating part (4) is supported by said housing (6) via at least one rotational shaft provided with said connecting structure according to any one of claims 3 to 5.

## Patentansprüche

1. Unterlegscheibe (18, 19), die geeignet ist, zwischen einem ersten Verbindungselement (8) und einem zweiten Verbindungselement (7) angeordnet zu werden, welche zu einer Relativverdrehung in der Lage sind, und die dazu geeignet ist, eine aus einer Reibung während der Relativverdrehung erzeugte Last aufzubringen, wobei die Schiebe (18, 19) folgendes aufweist:
einen Basisabschnitt (18a, 19a), der als eine Scheibe geformt ist und dessen Außenumfangsfläche dazu geeignet ist, als eine Reibungsfläche zu dienen;
einen Hauptdurchmesserabschnitt (18b, 19b), der als eine Scheibe geformt ist, dessen Durchmesser größer als der des Basisabschnitts (18a, 19a) ist und dessen Außenumfangsfläche dazu geeignet ist, als eine Reibfläche zu dienen, und der in einer von dem Basisabschnitt (18a, 19a) fortführenden, abgestuften Konfiguration vorgesehen ist,
**gekennzeichnet durch**
einen fixierten Abschnitt (18c, 19c), der als eine rechteckige Säule geformt ist und der von der Seite des Hauptdurchmesserabschnitts (18b, 19b) in der Achsrichtung vorragt.

2. Unterlegscheibe gemäß Anspruch 1, wobei ferner ein fixierter, konkaver Abschnitt (18d, 19d), der aus einem als rechteckige Säule geformten konkaven Abschnitt ausgebildet ist, um einen Fuß des fixierten Abschnitts (18c, 19c) herum vorgesehen ist.

3. Verbindungsstruktur mit einem ersten Verbindungselement (8) und einem zweiten Verbindungselement (7), die in der Lage sind, sich relativ zueinander zu drehen, und einer Unterlegscheibe (18, 19) mit den Merkmalen von Ansprüchen 1 oder 2, die zwischen den Verbindungselementen (7, 8) angeordnet ist, und eine Last aufbringt, die durch eine Reibung während der Relativverdrehung erzeugt wird, wobei
das erste Verbindungselement (8) ein abgestuftes Unterlegscheibenaufnahmeloch (15, 17) aufweist, das mit einer Basisabschnittaufnahmeeinrichtung (15a, 17a) versehen ist, die drehbar an den Basisabschnitt (18a, 19a) gepasst ist, und eine Hauptdurchmesserabschnittaufnahmeeinrichtung (15b, 17b) aufweist, die drehbar an den Hauptdurchmesserabschnitt (18b, 19b) gepasst ist, und
das zweite Verbindungselement (7) eine Fixierter-Abschnitt-Aufnahmeeinrichtung (21, 24) aufweist, die an dem fixierten Abschnitt (18c, 19c) gepasst und stationär damit gehalten ist.

4. Verbindungsstruktur gemäß Anspruch 3, wobei ein fixierter, konkaver Abschnitt (18d, 19d), der aus einem als rechteckige Säule geformten konkaven Abschnitt gebildet ist, ferner um einen Fuß des fixierten Abschnitts (18c, 19c) der Unterlegscheibe (18, 19) vorgesehen ist, und wobei ein Ende der Fixierter-Abschnitt-Aufnahmeeinrichtung (21, 24) des zweiten Verbindungselements (7) an den fixierten, konkaven Abschnitt (18d, 19d) gepasst und stationär damit gehalten ist.

5. Verbindungsstruktur gemäß Anspruch 4, wobei das Unterlegscheibenaufnahmeloch (15, 17) ein Durchloch ist, dessen Tiefe einer Summe der Dicken des Basisabschnitts (18a, 19a) und des Hauptdurchmesserabschnitts (18b, 19b) entspricht.

6. Innenlampe (19) mit einem Beleuchtungsteil (4), das mit einer Lichtquelle (2) versehen ist; einem Schalter (5), der eine Auswahl einer Beleuchtungssteuerung für die Lichtquelle (2) durchführt; und einem Gehäuse (6), das das Beleuchtungsteil (4) und den Schalter (5) stützt, wobei die Innenlampe (1) **dadurch gekennzeichnet ist, dass**
das Beleuchtungsteil (4) über zumindest eine Rotationswelle, die mit der Verbindungsstruktur gemäß einem der Ansprüche 3 bis 5 versehen ist, durch das Gehäuse (6) gestützt ist.

## Revendications

1. Cale (18, 19) adaptée pour être interposée entre un premier élément de raccordement (8) et un second élément de raccordement (7), qui peuvent tourner l'un par rapport à l'autre, et adaptée pour appliquer une charge générée par la friction pendant la rotation relative, ladite cale (18, 19) comportant :
une partie de base (18a, 19a) conformée comme un disque et dont la surface périphérique extérieure est adaptée pour faire office de surface de friction ;
une partie à diamètre majeur (18b, 19b) conformée comme un disque dont le diamètre est plus important que celui de ladite partie de base (18a, 19a) et dont la surface périphérique extérieure est adaptée pour faire office de surface de friction, et qui est prévue selon une configuration étagée se prolongeant depuis ladite partie de base (18a, 19a) , **caractérisée par**
une partie fixée (18c, 19c) conformée comme une colonne carrée qui se projette depuis le côté de ladite partie à diamètre majeur (18b, 19b) dans la direction axiale.

2. Cale selon la revendication 1, dans laquelle une partie concave fixe (18d, 19d) formée à partir d'une partie concave conformée comme une colonne carrée est en outre prévue autour d'un pied de ladite partie fixée (18c, 19c).

3. Structure de raccordement comprenant un premier élément de raccordement (8) et un second élément de raccordement (7), qui peuvent tourner l'un par rapport à l'autre, et une cale (18, 19) présentant les particularités des revendications 1 ou 2, qui est interposée entre lesdits éléments de raccordement (7, 8) et applique une charge générée par la friction générée durant la rotation relative, dans laquelle
ledit premier élément de raccordement (8) comprend un trou de réception de cale (15, 17) de forme étagée prévu avec un logement de partie de base (15a, 17a) qui est ajusté rotatif avec ladite partie de base (18a, 19a), et un logement de partie à diamètre majeur (15b, 17b) qui est ajusté rotatif avec ladite partie à diamètre majeur (18b, 19b), et
ledit deuxième élément de raccordement (7) comprend un logement de partie fixée (21, 24) ajusté et maintenu stationnaire avec ladite partie fixée (18c, 19c).

4. Structure de raccordement selon la revendication 3, dans laquelle une partie concave fixée (18d, 19d) formée à partir d'une partie concave conformée comme une colonne carrée est en outre prévue autour d'un pied de ladite partie fixée (18c, 19c) de ladite cale (18, 19), et une extrémité dudit logement de partie fixée (21, 24) dudit deuxième élément de raccordement (7) est ajustée et maintenue stationnaire avec ladite partie concave fixée (18d, 19d).

5. Structure de raccordement selon la revendication 4, dans laquelle ledit trou de réception de cale (15, 17) est un trou traversant dont la profondeur est une somme d'épaisseurs de ladite partie de base (18a, 19a) et de ladite partie à diamètre majeur (18b, 19b).

6. Lampe intérieure (1) comportant une partie d'éclairage (4) qui est prévue avec une source de lumière (2) ; un commutateur (5) qui fait une sélection d'une commande d'éclairage pour ladite source de lumière (2) ; et un logement (6) qui supporte ladite partie d'éclairage (4) et ledit commutateur (5), ladite lampe intérieure (1) **caractérisée en ce que**
ladite partie d'éclairage (4) est supportée par ledit logement (6) à travers au moins un arbre de rotation prévu avec ladite structure de raccordement selon l'une quelconque des revendications 3 à 5.
